# EUROPÄISCHE PATENTSCHRIFT

(11) **EP 2 888 145 B1**
(45) Veröffentlichungstag und Bekanntmachung des Hinweises auf die Patenterteilung: **08.04.2020**
(21) Anmeldenummer: 13791715.9
(22) Anmeldetag: 09.08.2013
(51) Int. Cl.: F16C 29/06, B61D 19/00, F16C 29/00

(54) **SCHWENKSCHIEBETÜRMODUL FÜR EIN SCHIENENFAHRZEUG**
SWINGING-SLIDING DOOR MODULE FOR A RAIL VEHICLE
MODULE DE PORTE LOUVOYANTE-COULISSANTE POUR VÉHICULE FERROVIAIRE

(30) Priorität: 27.08.2012 AT 34412 U; 27.06.2013 AT 5009513 U
(43) Veröffentlichungstag der Anmeldung: 01.07.2015
(73) Patentinhaber: Knorr-Bremse Gesellschaft mit beschränkter Haftung, 2340 Mödling (AT)
(72) Erfinder: MAIR, Andreas, 4554 Oberschlierbach (AT); ZARL, Heinz, 3311 Zeilem (AT)
(74) Vertreter: Patentanwälte Barger, Piso & Partner
(86) Internationale Anmeldenummer: PCT/AT2013/050157
(87) Internationale Veröffentlichungsnummer: WO 2014/032068

(56) Entgegenhaltungen:
- EP-A1- 0 788 960
- EP-A1- 1 314 626
- WO-A1-2010/108664
- WO-A2-2011/129918
- DE-A1-102008 000 867
- DE-U1-202006 015 735
- US-A- 5 438 800

## Beschreibung

Die Erfindung betrifft ein Schwenkschiebetürmodul für ein Schienenfahrzeug, entsprechend dem Oberbegriff des Anspruches 1 und der WO 2010/108664.

Diese Druckschrift der Anmelderin betrifft eine Schwenkschiebetür insbesondere für Schienenfahrzeuge mit einem Trag- und Führungssystem. Dabei ist jede Tür mit zwei Rollenpaaren in einer gekrümmten Schiene gelagert, die beiden Rollenpaare weisen entsprechend der Türbreite möglichst großen Abstand voneinander auf. Um ein Durchfahren der gekrümmten Schienen zu ermöglichen, ist jedes Rollenpaar bezüglich der Aufhängung der Türflügel in Grenzen gelenkig um eine vertikale Achse gelagert. Da zwei derartige Rollenpaare pro Türblatt vorgesehen sind, ist dieses bezüglich der Schiene zwangsgeführt.

Aus der DE 20 2006 015 735 U1 ist eine Schiebetür/Schwenkschiebetür bekannt, bei der ein in einer geradlinigen Führung beweglicher Schlitten äußerst präzise geführt wird. Zum Ausgleich von Toleranzen, und auch um Ausstellbewegungen bei Schwenkschiebetüren zu ermöglichen, ist eine zur Führung parallele, horizontale, Schwenkachse vorgesehen, an der Türbefestigungselemente schwenkbar gelagert sind.

Eine ähnliche Schwenkschiebetüre ist aus der EP 1 314 626 bekannt, bei der ebenfalls eine horizontale, parallel zur geradlinigen Führungsschiene verlaufende Achse vorgesehen ist, an der die Türblätter pendelnd aufgehängt sind.

Aus der US 5,3438,800 ist eine Schwenkschiebetür bekannt, die ausschließlich über eine Konsole im obersten Bereich der Hauptschließkante gehalten wird. Dies führt zu einem so großen Drehmoment um eine Achse normal zur gemittelten Türblattebene, dass zur Vermeidung des schräg Stellens in der Offen-Position ein spezieller Haken am Türblatt mit einer Fangvorrichtung am Wagenkasten zusammenwirkt.

Schwenkschiebetürmodule der genannten Art sind prinzipiell bekannt. Dabei gleitet oder rollt ein Schlitten auf der Profilschiene und ermöglicht die Verschiebung der Schwenkschiebetür. Problematisch ist dabei, dass eine Verformung eines Trägers, auf dem die Profilschiene befestigt ist, unweigerlich auch zu einer Verformung der Profilschiene führt.

Häufig auftretende Verformungen des genannten Trägers und damit der Profilschiene sind Durchbiegungen in vertikaler und horizontaler Richtung sowie eine Verdrehung/Verwindung derselben. Eine Durchbiegung in vertikaler Richtung wird im Wesentlichen durch die Gewichtskraft der Schwenkschiebetür sowie vertikale Stöße/Beschleunigungen verursacht. Horizontale Durchbiegungen können beispielsweise durch Druckschwankungen verursacht sein, welche bei Begegnung zweier Züge beziehungsweise Tunnelein- und ausfahrten entstehen. Durch die relativ großen Flächen der Schwenkschiebetüren entstehen insbesondere in Hochgeschwindigkeitszügen enorme Kräfte. Eine Verdrehung des Trägers entsteht bei unsymmetrischem Querschnitt gegenüber der Richtung der eingeleiteten Kraft. Aufgrund der Komplexität der auftretenden Kräfte und der meist komplexen Querschnittsform des Trägers sowie der darauf befestigten Profilschiene ist eine Torsion derselben praktisch unvermeidbar.

Systembedingt sind also Durchbiegungen und eine Torsion des genannten Trägers und der darauf befestigten Profilschiene praktisch nicht zu verhindern. Da die Schwenkschiebetür dieser Verformung aufgrund ihrer Steifigkeit (vor allem gegenüber vertikaler Durchbiegung und gegenüber Torsion) nicht oder nur bedingt folgen kann, kommt es zu Verspannungen in der Lagerung zwischen dem Schlitten und der Profilschiene. Insbesondere bei Einsatz von Wälzlagern können Lagerschäden oder verringerte Lebensdauer der Linearführung die Folge sein.

Um die Belastungen der Lager in Grenzen zu halten, werden die Träger für die Profilschienen nach dem Stand der Technik relativ steif dimensioniert, um die Verformungen und damit die Verspannungen in den Lagerstellen möglichst gering zu halten. Naturgemäß wird dadurch das Gewicht des Schwenkschiebetürmoduls vergrößert.

Die Aufgabe der Erfindung ist es daher, ein verbessertes Schwenkschiebetürmodul anzugeben. Insbesondere soll die Lebensdauer der Lagerung zwischen Schlitten und Profilschiene verlängert und/oder das Gewicht des Schwenkschiebetürmoduls verringert werden.

Die Aufgabe der Erfindung wird mit einem Schwenkschiebetürmodul der eingangs genannten Art gelöst, umfassend zumindest ein Drehgelenk, welches eine Drehung der Schwenkschiebetür gegenüber der Profilschiene um eine im Wesentlichen horizontal und quer zur Schieberichtung ausgerichtete Drehachse erlaubt.

Die Aufgabe der Erfindung wird weiterhin mit einem Schienenfahrzeug gelöst, das wenigstens ein Schwenkschiebetürmodul der genannten Art umfasst.

Dadurch wird erreicht, dass eine Verformung der Profilschiene ermöglicht wird, wobei die Lagerung zwischen Schlitten und Profilschiene nicht oder nur geringfügig belastet wird. Gegenüber bekannten Schwenkschiebetürmodulen kann ein Träger, auf dem die Profilschiene befestigt ist, vergleichsweise somit fragil gestaltet werden, da die Schwenkschiebetür (bzw. das Türblatt) trotz einer Verformung der Profilschiene stets leichtgängig bleibt und Schäden in der Lagerung zwischen Schlitten und Profilschiene vermieden werden. Damit können das Gesamtgewicht des Schienenfahrzeugs reduziert und dessen Fahrleistungen verbessert werden.

Durch Zulassen einer Drehung um eine im Wesentlichen horizontal und quer zur Schieberichtung ausgerichtete Drehachse können vertikale Durchbiegungen der Profilschiene ausgeglichen werden.

Durch Zulassen einer Drehung um eine im Wesentlichen vertikal ausgerichtete Drehachse können horizontale Durchbiegungen der Profilschiene ausgeglichen werden.

Die Drehung kann dabei durch ein Drehgelenk oder mehrere Drehgelenke ermöglicht werden. Wenn die Drehung der Schwenkschiebetür gegenüber der Profilschiene um zwei zueinander quer stehende Achsen ermöglicht wird, kann auch von einer "kardanischen Aufhängung" der Schwenkschiebetür gesprochen werden.

Prinzipiell kann ein Drehgelenk im Schlitten, zwischen Konsole und Schlitten, in der Konsole, zwischen Konsole und Schwenkschiebetür und/oder in der Schwenkschiebetür selbst vorgesehen sein. Bei letzterem Fall kann zum Beispiel eine Montagefläche der Schwenkschiebetür, an welcher die Konsole befestigt wird, gelenkig um das eigentliche Türblatt gelagert sein.

Die Erfindung kann auch darin gesehen werden, zu erkennen, dass die erwähnte Problematik der Lagerverspannungen auf die bekannte Weise systembedingt nicht vollständig lösbar ist, da Verformungen in den tragenden Elementen unvermeidlich sind, auch wenn sie noch so steif gestaltet werden.

An dieser Stelle wird angemerkt, dass sich die Merkmale der Erfindung im Besonderen für den Einsatz bei einer Schwenkschiebetüre beziehungsweise bei einem Schwenkschiebemodul eignen. Nichtsdestotrotz kann die Erfindung auch für eine Schiebetür beziehungsweise ein Schiebetürmodul eingesetzt werden, bei der oder dem ein Schwenkmechanismus fehlt.

Weitere vorteilhafte Ausgestaltungen und Weiterbildungen der Erfindung ergeben sich aus den Unteransprüchen sowie aus der Beschreibung in Zusammenschau mit den Figuren.

Vorteilhaft ist es, wenn das zumindest eine Drehgelenk eine Drehung der Schwenkschiebetür gegenüber der Profilschiene auch eine um eine im Wesentlichen parallel zur Schieberichtung ausgerichtete Drehachse erlaubt. Durch Zulassen dieser Drehung kann ein Verwinden der Profilschiene ausgeglichen werden.

Günstig ist es, wenn das zumindest eine Drehgelenk durch eine in einer Lagerschale oder einem Wälzlager rotierende Achse gebildet ist. Das Drehgelenk ist in diesem Fall also durch ein Gleitlager oder ein Wälzlager gebildet, dass die Rotation einer im Lager gelagerten Achse ermöglicht. Auf diese Weise kann das Drehgelenk durch leicht verfügbare Mittel in die Realität umgesetzt werden.

Vorteilhaft ist es, wenn das zumindest eine Drehgelenk durch zwei aufeinander abrollende Wälzflächen gebildet ist. Eine der beiden Wälzflächen ist zu diesem Zweck konvex ausgebildet, und die andere Wälzfläche ist konkav mit gleicher oder geringerer Krümmung, eben oder ebenfalls konvex ausgebildet.

Besonders vorteilhaft ist es, wenn eine Wälzfläche eine allgemein zylindrische, insbesondere eine kreiszylindrische, Form aufweist. Auf diese Weise wird eine Drehung um eine Drehachse ermöglicht. Wegen der linienförmigen Berührung der Wälzflächen können zudem vergleichsweise hohe Kräfte übertragen werden.

In einer bevorzugten Ausführungsform umfasst das Schwenkschiebetürmodul zwei allgemein zylindrische Wälzflächen mit aufeinander quer stehenden Achsen. Dadurch wird eine Drehung um zwei Drehachsen ermöglicht. Ein solches Drehgelenk kann die Verformungen einer Profilschiene somit besonders gut ausgleichen. Wegen der linienförmigen Berührung der Wälzflächen können zudem wiederum vergleichsweise hohe Kräfte übertragen werden.

Besonders vorteilhaft ist es auch, wenn eine Wälzfläche mehrdimensional gewölbt, insbesondere kugelförmig, ist. Auf diese Weise wird ebenfalls eine Drehung um mehrere Drehachsen ermöglicht. Ein solches Drehgelenk kann die Verformungen einer Profilschiene somit ebenfalls besonders gut ausgleichen. Wegen der mehrdimensionalen Wölbung können die Wälzflächen bei Drehung um eine beliebige Achse aufeinander abrollen, wodurch ein Aufeinandergleiten vermieden und der Verschleiß der Wälzflächen damit verringert wird.

Günstig ist es, wenn eine Gewichtskraft der Schwenkschiebetür die beiden Wälzflächen aneinander presst. Da die beiden Wälzflächen dann ohne weitere Maßnahmen aneinander gepresst werden, kann das Schwenkschiebetürmodul in diesem Fall konstruktiv relativ einfach gestaltet werden, wodurch ein weiterer Gewichts- und Preisvorteil resultiert.

Günstig ist es weiterhin, wenn die Linearführung als Linearwälzführung und der Schlitten als ein auf der Profilschiene mittels umlaufender Wälzkörper gelagerter Führungswagen ausgebildet ist. Dadurch läuft die Schwenkschiebetür leichtgängig und spielfrei auf der Profilschiene. Insbesondere, wenn die Profilschiene kreisförmigen Querschnitt aufweist, kann ein Drehgelenk, welches eine Drehung der Schwenkschiebetür gegenüber der Profilschiene um eine im Wesentlichen parallel zur Schieberichtung ausgerichtete Drehachse erlaubt, entfallen. Wird beispielsweise eine im Wesentlichen rechteckige Profilschiene verwendet, dann kann zwischen der Schwenkschiebetür und der Profilschiene ein Drehmoment um die genannte Drehachse übertragen werden.

Linearwälzführungen der genannten Art sind Wälzführungen, die mit Kugeln oder Rollen als Wälzkörper ausgeführt werden können. Die Wälzkörper bilden in einem Kontaktbereich das Bindeglied zwischen Profilschiene und Führungswagen. Die momentan nicht in Kontakt mit der Profilschiene stehenden Wälzkörper werden über einen Rückführbereich (z.B. Rückführkanal) vom Ende des Kontaktbereichs zu dessen Beginn oder umgekehrt geleitet. Die Wälzkörper wandern also in einer geschlossenen Bahn. In aller Regel ist diese Bahn im Wesentlichen in einer Ebene, der "Umlaufebene" angeordnet. Dabei kann eine ovalförmige Bahn vorgesehen sein, oder es sind hintereinander mehrere ovalförmige oder kreisförmige Bahnen vorgesehen, die in derselben Ebene angeordnet sind und in ihrer Gesamtheit einen Kontaktbereich bilden. Darüber hinaus können mehrere Bahnen auch in unterschiedlichen aber zueinander parallelen Ebenen liegen. Schließlich können die Bahnen auch einander kreuzen. Beispielsweise kann eine Umlaufbahn die Umlaufebene im Umkehrbereich verlassen, um eine Kreuzung mit einer anderen Umlaufbahn zu ermöglichen. Im Rahmen der Erfindung sind solche Umlaufbahnen aber dennoch als "im Wesentlichen in einer Ebene angeordnet" anzusehen. Gegebenenfalls können die Wälzkörper auch in einem Wälzkörperkäfig angeordnet sein.

Vorteilhaft ist es, wenn eine auf der Konsole angeordnete konvexe Wälzfläche durch die Gewichtskraft der Schwenkschiebetür auf eine horizontal ausgerichtete ebene Wälzfläche des Schlittens gepresst wird. Auf diese Weise resultiert ein besonders einfacher und kostengünstiger Aufbau, insbesondere wenn die Linearführung als Linearwälzführung ausgebildet ist. In aller Regel besteht der Führungswagen nämlich aus hochfestem und gehärtetem Stahl und ist an der Oberseite geschliffen. Auf diese Weise kann die Oberseite eines käuflich erwerbbaren Führungswagens ohne weitere Maßnahmen als Wälzfläche fungieren. Konsolenseitig braucht daher nur eine konvexe Wälzfläche vorgesehen werden, um ein Drehgelenk im Sinne der Erfindung zu realisieren.

Vorteilhaft ist es weiterhin, wenn zwei aufeinander abrollende Wälzflächen mit Hilfe eines Gegenhalters gegen Abheben gesichert sind. Dadurch wird vermieden, dass die Wälzflächen (maßgeblich) voneinander abheben können. Insbesondere bei schweren Schwenkschiebetüren können damit Schäden an der Wälzfläche vermieden oder zumindest verringert werden, die durch ein Gegeneinanderschlagen der Wälzflächen resultieren können. Ohne weitere Maßnahmen können beispielsweise vertikale Stöße auf das Schienenfahrzeug ein Ausheben der Schwenkschiebetür und ein anschließendes Aufschlagen auf der Lagerfläche und die Zerstörung derselben bewirken. Insbesondere bei gehärteten Oberflächen könnten Teile der Lagerfläche abplatzen.

Besonders vorteilhaft ist es auch, wenn der Gegenhalter die Wälzflächen mit Hilfe einer Federkraft und/oder durch elastische Verformung aneinander presst. Auf diese Weise wird erreicht, dass sich der Gegenhalter beim Abwälzen der Wälzflächen gegenüber der gehaltenen Wälzfläche bewegt, insbesondere gegenüber dieser verdrehen kann und ein Abwälzen der Wälzflächen gegen mäßigen Widerstand möglich ist. Zum Einsatz können alle Bauarten von Federn sowie elastischer Bauteile (z.B. Gummipuffer) kommen. Alternativ oder zusätzlich dazu kann auch der Gegenhalter so gestaltet werden, dass er dem Abwälzen der Wälzflächen durch elastische Verformung nur mäßigen Widerstand entgegensetzt.

Besonders vorteilhaft ist es zudem, wenn die Profilschiene auf einem in Schieberichtung der Schwenkschiebetür ausgerichteten Träger befestigt oder von diesem umfasst ist, wobei die Berührfläche der Profilschiene mit dem Träger (im unbelasteten Zustand desselben) im Wesentlichen horizontal ausgerichtet ist.

Bei herkömmlichen Führungssystemen ist die Berührfläche der Profilschiene mit dem Träger im Wesentlichen vertikal ausgerichtet wodurch auch die Montagefläche des Führungswagens vertikal ausgerichtet ist. Insbesondere wenn die genannte Montagefläche nach außen weist, wird eine komfortable Montage der Profilschiene sowie der Schwenkschiebetür beziehungsweise einer Konsole zur Befestigung der Schwenkschiebetür ermöglicht.

Die Einbauhöhe des genannten Führungssystems ist trotz der erwähnten stirnseitigen Montage der Schwenkschiebetür beziehungsweise der Konsole auf dem Führungswagen in Summe vergleichsweise groß. Insbesondere bei Einsatz in Doppelstockwaggons und auch wenn mehrere Profilschienen zur Führung der beiden Türblätter einer doppelflügeligen Schwenkschiebetür übereinander angeordnet werden, ergeben sich Einschränkungen hinsichtlich der verbleibenden Durchgangshöhe, da die Gesamthöhe der Waggons nicht beliebig vergrößert werden kann.

Durch die besondere Ausrichtung der Profilschiene überragt diese den Träger im Montagebereich der Profilschiene nun in im Wesentlichen vertikaler Richtung. Auf diese Weise kann eine vergrößerte Einstiegshöhe erzielt werden, ohne dass dazu die Gesamtbauhöhe des Schwenkschiebetürmoduls vergrößert werden müsste. Dadurch ergibt sich im Speziellen bei sehr niedrigen Schienenfahrzeugen beziehungsweise bei Doppelstockwaggons eine deutliche Verbesserung der Einstiegssituation.

Insbesondere bei nicht ebenen Berührflächen liegt im Sinne der Erfindung dann eine im Wesentlichen horizontale Ausrichtung derselben vor, wenn eine resultierende Auflagekraft zwischen Profilschiene und Träger in im Wesentlichen vertikaler Richtung wirkt. Nicht ebene Berührflächen können beispielsweise die Form eines Zylindersegments haben, z.B. wenn die Profilschiene einen kreisförmigen Querschnitt aufweist.

Günstig ist es, wenn eine gedachte Verbindungslinie zweier Wälzkörper, welche die Profilschiene berühren und in Bezug auf eine zur Montagefläche normal ausgerichtete Schwerachse des Profilquerschnitts einander gegenüber liegen, im Wesentlichen horizontal ausgerichtet ist. Auf diese Weise wird einerseits eine niedrige Bauhöhe des Führungssystems erreicht, andererseits können horizontal wirkende Kräfte sehr gut aufgenommen werden. Diese können beispielsweise durch Druckschwankungen verursacht sein, welche bei Begegnung zweier Züge beziehungsweise Tunnelein- und ausfahrten entstehen. Durch die relativ großen Flächen der Schwenkschiebetüren entstehen insbesondere in Hochgeschwindigkeitszügen enorme Kräfte.

Günstig ist es auch, wenn zumindest eine Umlaufebene der Wälzkörper im Wesentlichen horizontal ausgerichtet ist. Dadurch wird eine besonders niedrige Bauweise des Führungssystems erreicht. Denkbar ist es auch, dass eine von zwei übereinander angeordneten Umlaufebenen im Wesentlichen horizontal und die andere schräg dazu ausgerichtet ist, insbesondere im Wesentlichen vertikal dazu.

Vorteilhaft ist es, wenn der Träger im Querschnitt beidseits der Profilschiene höher ist als im Bereich der Profilschiene. Insbesondere weist der Träger im Querschnitt auf seiner Ober- und Unterseite seitlich von der Profilschiene dazu eine Erhöhung auf. Im Speziellen kann der Träger auch einen im Wesentlichen H-förmigen oder X-förmigen oder T-förmigen Querschnitt aufweisen.

Dadurch kann einerseits die vertikale andererseits auch die horizontale Biegesteifigkeit des Trägers erhöht werden. Das Gewicht der an dem Führungssystem befestigten Schwenkschiebetür sowie vertikale Stöße/Beschleunigungen verursachen daher nur eine vergleichsweise geringe Durchbiegung des Trägers in vertikaler Richtung. Desgleichen bewirkt eine horizontale Kraftkomponente auf die Schwenkschiebetür, wie sie insbesondere durch den in Tunnels auftretenden Sog- und Druckbeaufschlagungen entstehen, eine ebenfalls vergleichsweise geringe Durchbiegung des Trägers in horizontaler Richtung. Darüber hinaus wird auch eine Torsionsneigung des Trägers verringert. Der Träger kann somit insgesamt relativ dünnwandig gestaltet werden, wodurch das Gesamtgewicht des Schienenfahrzeugs reduziert und dessen Fahrleistungen verbessert werden. Durch die geringe Verformung des Trägers werden auch die Belastungen des Führungssystems reduziert, wodurch eine längere Lebensdauer beziehungsweise auch längere Wartungsintervalle desselben resultieren.

An dieser Stelle wird angemerkt, dass die genannten Merkmale auch dann von Vorteil sein können, wenn die Berührfläche der Profilschiene mit dem Träger im Wesentlichen vertikal ausgerichtet ist. Die genannten Merkmale können somit die Basis für eine unabhängige Erfindung bilden.

Besonders vorteilhaft ist es, wenn das Führungssystem zwei Linearführungen umfasst, wobei eine erste Profilschiene auf der Oberseite des Trägers und eine zweite Profilschiene auf der Unterseite des Trägers montiert sind. Auf diese Weise kann ein einziger Träger zum Halten einer doppelflügeligen Schwenkschiebetür eingesetzt werden. Ein Schwenkschiebetürmodul umfasst dementsprechend eine an der Konsole oder den Konsolen der unteren Linearführung befestigte erste Schwenkschiebetür und eine an der Konsole oder den Konsolen der oberen Linearführung befestigte zweite Schwenkschiebetür.

Der Vorteil der geringen Bauhöhe des Führungssystems tritt hier besonders hervor. Insbesondere ist es auch von Vorteil, wenn der Träger in Bezug auf seine Horizontalachse symmetrisch aufgebaut ist, da dann keine besondere Montagerichtung zu beachten ist.

Besonders vorteilhaft ist es auch, wenn die Konsolen der unteren und oberen Linearführung im Wesentlichen identisch gestaltet und um 180° um eine horizontale und normal zur Profilschiene ausgerichtete Achse verdreht sind. Dadurch wird die Anzahl unterschiedlicher Bauteile des Führungssystems reduziert und damit die Herstellung sowie Lagerhaltung vereinfacht.

Günstig ist es, wenn die Befestigungsmittel auf den Konsolen der unteren und oberen Linearführung auf im Wesentlichen derselben Höhe angeordnet sind. Dadurch ist es möglich, auch die Türflügel ähnlich oder sogar identisch aufzubauen. Die Herstellung eines Schwenkschiebetürmoduls beziehungsweise die Lagerhaltung der für seine Herstellung oder Reparatur benötigten Teile wird damit noch einmal vereinfacht.

Vorteilhaft ist es, wenn die Profilschiene einen im Wesentlichen C-förmigen beziehungsweise U-förmigen Querschnitt aufweist und der Führungswagen zwischen den gegenüberliegenden Endschenkeln des C-förmigen beziehungsweise U-förmigen Querschnitts gelagert ist. Dadurch rücken die Wälzebenen/Kontaktbereiche vergleichsweise weit nach außen, was sich positiv auf die Stabilität der Linearwälzführung auswirkt. Bei gleicher Stabilität kann somit eine deutlich schmälere Linearwälzführung eingesetzt werden, als dies im Stand der Technik möglich ist. Dadurch kann auch die Bautiefe des Führungssystems für die Schwenkschiebetür deutlich reduziert werden.

Besonders günstig ist es weiterhin, wenn die Wälzkörper zwischen einem Endschenkel der Profilschiene und dem Führungswagen einreihig angeordnet sind. Dadurch ist die Linearführung besonders tolerant gegenüber Verformungen des Führungssystems und damit besonders gut für den Einsatz bei Schienenfahrzeugen geeignet. Aus den genannten Gründen ist die Linearführung zudem sehr langlebig.

Günstig ist es auch, wenn die Wälzkörper zwischen einem Endschenkel der Profilschiene und dem Führungswagen mehrreihig, insbesondere zweireihig, angeordnet sind. Dadurch ist diese besonders resistent gegenüber Verdrehung um ihre Längsachse.

Vorteilhaft ist es schließlich, wenn an den Enden einer Konsole respektive eines Konsolenbereichs zwei voneinander beabstandete Führungswägen angeordnet sind. Insbesondere ist es dabei von Vorteil, wenn die beiden Führungswägen in Summe maximal halb so lang sind wie die Konsole respektive der Konsolenbereich. Dadurch bleibt die Lagerung der Führungswägen auch bei vergleichsweise starker Durchbiegung des Trägers respektive der Profilschiene leichtgängig.

Zum besseren Verständnis der Erfindung wird diese anhand der nachfolgenden Figuren näher erläutert. Es zeigen
- Fig. 1: ein beispielhaftes und schematisch dargestelltes Führungssystem für eine Schwenkschiebetür eines Schienenfahrzeugs in Schrägansicht;
- Fig. 2: das Führungssystem aus Fig. 1 im Querschnitt;
- Fig. 3: ein Beispiel einer Linearwälzführung mit ovalen Umlaufbahnen der Wälzkörper;
- Fig. 4: ein Beispiel einer Linearwälzführung mit kreisförmigen Umlaufbahnen der Wälzkörper;
- Fig. 5: das Führungssystem aus Fig. 1 im Längsschnitt;
- Fig. 6: wie Fig. 5, nur mit einem elastischen Element zwischen Konsole und Gegenhal-ter;
- Fig. 7: ein Gelenk mit allgemein zylindrischen Wälzflächen mit aufeinander quer ste-henden Achsen;
- Fig. 8: ein Gelenk mit mehrdimensional gewölbten Wälzflächen;
- Fig. 9: ein Führungssystem mit vertikal angeordnetem Führungswagen;
- Fig. 10: ein Beispiel einer Linearwälzführung mit C-förmiger beziehungsweise U-förmiger Profilschiene;
- Fig. 11: ein Beispiel einer Linearwälzführung mit einander kreuzenden Umlaufbahnen der Wälzkörper.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

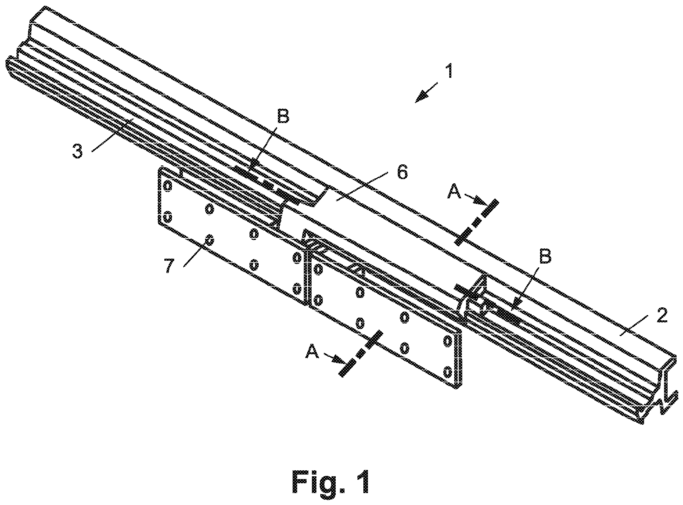

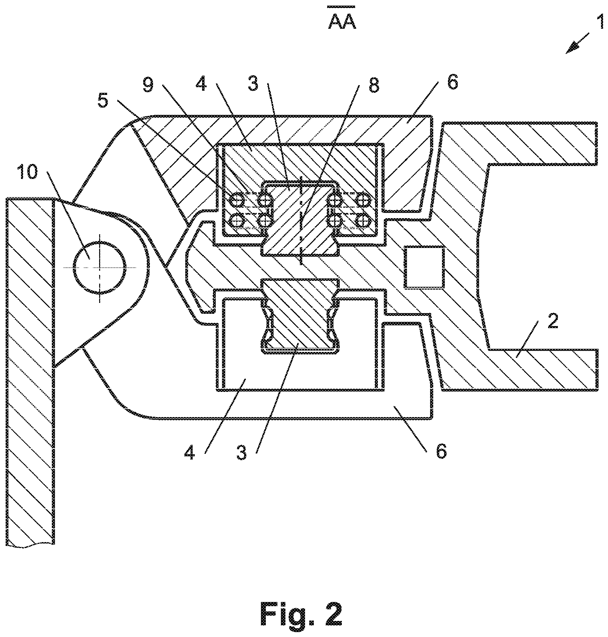

Die Figuren 1 und 2 zeigen ein beispielhaftes und schematisch dargestelltes Führungssystem 1 für eine Schwenkschiebetür eines Schienenfahrzeugs in Schrägansicht (Fig. 1) sowie im Schnitt (Fig. 2). Das Führungssystem 1 umfasst einen in Schieberichtung der Schwenkschiebetür ausgerichteten Träger 2 sowie eine Linearwälzführung mit zwei Profilschienen 3 und zwei Führungswagen 4, wobei die Profilschiene 3 auf dem Träger 2 befestigt (beispielsweise mit dieser verschraubt) oder von diesem umfasst ist und der wenigstens eine Führungswagen 4 auf der Profilschiene 3 mittels umlaufender Wälzkörper 5 gelagert ist. Weiterhin umfasst das Führungssystem mehrere Konsolen 6 mit Befestigungsmitteln 7 (hier Befestigungslöcher) zum Befestigen zweier Schwenkschiebetüren (nicht dargestellt), wobei die Konsolen 6 mit dem zumindest einen Führungswagen 4 verbunden oder von diesem umfasst ist/sind. Die Berührfläche einer Profilschiene 3 mit dem Träger 2 ist in diesem Beispiel im Wesentlichen horizontal ausgerichtet. Die Profilschiene 3 erstreckt sich in der Fig. 1 nicht über die gesamte Länge des Trägers 2. Selbstverständlich kann dies aber der Fall sein.

Der Träger 2 kann fix mit dem Schienenfahrzeug verbunden sein oder aber auch bewegbar sein. Dabei wird der Träger 2 quer zur Schieberichtung der Schwenkschiebetüren ausgestellt, sodass die Schwenkschiebetüren verfahren werden können. Insbesondere bei einer solchen Bauweise ist auf geringes Gewicht der gesamten Anordnung zu achten, da dieses das Führungssystem des Trägers 2 (nicht dargestellt) vergleichsweise stark belastet.

In der Fig. 1 ist gut zu sehen, dass das Führungssystem 1 in diesem Beispiel zwei Linearführungen aufweist, wobei eine erste Profilschiene 3 auf der Oberseite des Trägers 2 und eine zweite Profilschiene 3 auf der Unterseite des Trägers 2 montiert ist. Auf diese Weise kann ein einziger Träger 2 zum Halten einer doppelflügeligen Schwenkschiebetür eingesetzt werden. Der Vorteil der geringen Bauhöhe des Führungssystems tritt hier besonders hervor. Insbesondere ist es auch von Vorteil, wenn der Träger 2 in Bezug auf die Horizontalebene symmetrisch aufgebaut ist, da dann keine besondere Montagerichtung zu beachten ist.

Gut zu sehen ist in Fig. 1 auch, dass die Konsolen 6 der unteren und oberen Linearführung in diesem Beispiel im Wesentlichen identisch gestaltet und um 180° um eine horizontale und normal zur Profilschiene 3 ausgerichtete Achse verdreht sind. Dadurch wird die Anzahl unterschiedlicher Bauteile des Führungssystems 1 reduziert und damit die Herstellung sowie Lagerhaltung vereinfacht.

Schließlich ist in der Fig. 1 auch gut zu sehen, dass die Befestigungsmittel 7 auf den Konsolen 6 der unteren und oberen Linearführung in diesem Beispiel auf im Wesentlichen derselben Höhe angeordnet sind. Dadurch ist es möglich, auch die Türflügel ähnlich oder sogar identisch aufzubauen. Die Herstellung eines Schwenkschiebetürmoduls beziehungsweise die Lagerhaltung der für seine Herstellung oder Reparatur benötigten Teile wird damit noch einmal vereinfacht.

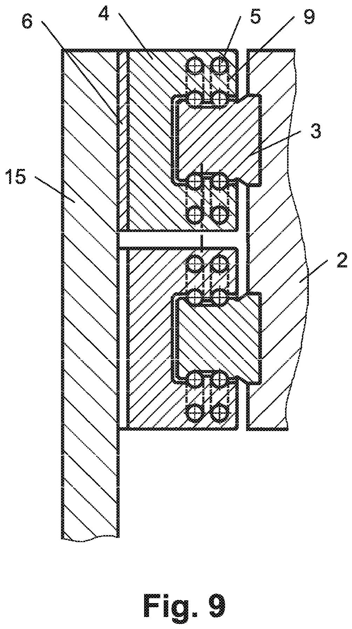

Wie insbesondere aus der Fig. 2 gut ersichtlich ist, überragen die Profilschienen 3 den Träger 2 in diesem Beispiel im Montagebereich der Profilschienen 3 in vertikaler Richtung. Auf diese Weise kann eine vergrößerte Einstiegshöhe/Durchgangshöhe erzielt werden, ohne dass dazu die Gesamtbauhöhe des Schwenkschiebetürmoduls 1 vergrößert werden müsste (vergleiche hierzu auch Fig. 9).

Aus der Fig. 2 ist weiterhin ersichtlich, dass bei dieser Ausführungsform eine gedachte Verbindungslinie zweier Wälzkörper 5, welche die Profilschiene 3 berühren und in Bezug auf eine zur Montagefläche normal ausgerichtete Schwerachse 8 des Profilquerschnitts einander gegenüber liegen, im Wesentlichen horizontal ausgerichtet ist. Weiterhin ist eine Umlaufebene der Wälzkörper 5 im Wesentlichen horizontal ausgerichtet.

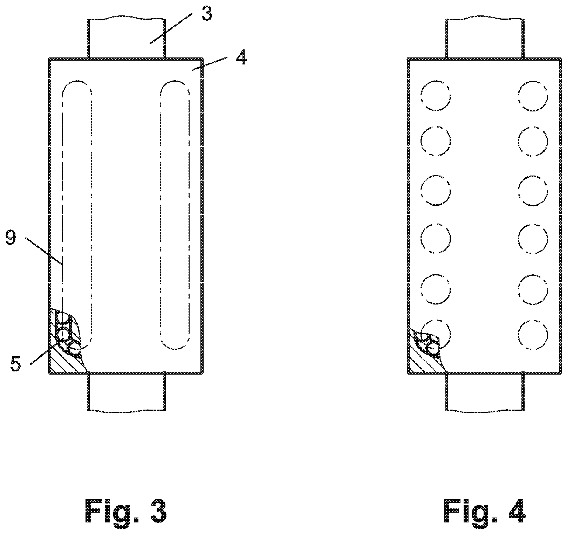

Die Figuren 3 und 4 zeigen dazu zwei Beispiele für die Umlaufbahnen 9 der Wälzkörper 5 im Führungswagen 4. In der Fig. 3 laufen die Wälzkörper 5 entlang von ovalen Umlaufbahnen 9 um, in der Fig. 4 entlang von kreisförmigen Umlaufbahnen 9. Die Umlaufbahnen 9 liegen bei der vorgestellten Variante des Führungssystems 1 in einer horizontalen Ebene. Durch die genannten Maßnahmen wird einerseits eine besonders geringe Bauhöhe des Führungssystems 1 erreicht, andererseits können horizontal wirkende Kräfte sehr gut aufgenommen werden, welche beispielsweise durch auf die Schwenkschiebetür wirkenden Druckschwankungen verursacht sein können. Generell können die Umlaufebenen der Wälzkörper 5 auch gegenüber der Horizontalen etwas geneigt sein, ohne dass dadurch die Bauhöhe des Führungssystems übermäßig zunimmt. Als vorteilhaft hat es sich herausgestellt, wenn eine Umlaufebene um nicht mehr als 20° gegenüber der Horizontalen geneigt ist.

Aus der Fig. 2 ist weiterhin ersichtlich, dass der Träger 2 in dem dargestellten Beispiel im Querschnitt beidseits der Profilschienen 3 höher ist als im Bereich der Profilschiene 3. Der Träger 2 weist im Querschnitt dazu auf seiner Ober- und Unterseite seitlich von den Profilschienen 3 eine Erhöhung auf. Der Träger 2 weist in diesem Beispiel somit einen im Wesentlichen H-förmigen beziehungsweise X-förmigen oder T-förmigen Querschnitt auf. Dadurch kann einerseits die vertikale andererseits auch die horizontale Biegesteifigkeit des Trägers 2 deutlich erhöht werden. Kräfte sowohl in horizontaler als auch in vertikaler Richtung verursachen daher nur eine vergleichsweise geringe Durchbiegung des Trägers 2. Durch das vergleichsweise hohe Torsionsträgheitsmoment bleibt auch eine Verdrehung des Trägers 2 gering. An dieser Stelle wird angemerkt, dass die genannten Merkmale auch dann von Vorteil sein können, wenn die Umlaufebene der Wälzkörper vertikal ausgerichtet ist (vergleiche dazu Fig. 9).

Schließlich ist in Fig. 2 gut ein Drehgelenk zu sehen, das in diesem Beispiel eine Drehung der Schwenkschiebetür gegenüber der Profilschiene 3 um eine im Wesentlichen parallel zur Schieberichtung ausgerichtete Drehachse erlaubt. Dadurch kann einerseits ein Verwinden der Profilschiene ausgeglichen werden, andererseits ist es auch möglich, das Führungssystem 1 in einfacher Weise an verschiedene Einbausituationen anzupassen. Insbesondere moderne Schienenfahrzeuge weisen nicht zwangsläufig vertikal verlaufende Seitenwände auf, sondern verjüngen sich nach oben hin. Dadurch steht die Schwenkschiebetür etwas schräg gegenüber dem Führungssystem 1. Mit Hilfe des Drehgelenks kann das dargestellte Führungssystem 1 aber auch uneingeschränkt in solchen Fällen angewandt werden. Das Drehgelenk ist in diesem Fall durch eine in einer Lagerschale rotierende Achse 10 gebildet, denkbar ist aber natürlich auch die Verwendung eines Wälzlagers. Auch wäre es möglich, das Gelenk aus einem in einer Kugelpfanne gelagerten Kugelkopfs auszubilden, sodass Drehungen um mehrere Achsen möglich sind. Desgleichen könnte ein Kardangelenk vorgesehen sein.

Das Zulassen einer Drehung um die Längsachse ist keineswegs die einzige Möglichkeit, eine Verdrehung zwischen Schwenkschiebetür und Profilschiene 3 zuzulassen. Denkbar ist auch, dass das das Führungssystem zumindest ein Drehgelenk umfasst, welches eine Drehung der Schwenkschiebetür gegenüber der Profilschiene 3 um eine im Wesentlichen horizontal und quer zur Schieberichtung ausgerichtete Drehachse und/oder eine im Wesentlichen vertikal ausgerichtete Drehachse erlaubt.

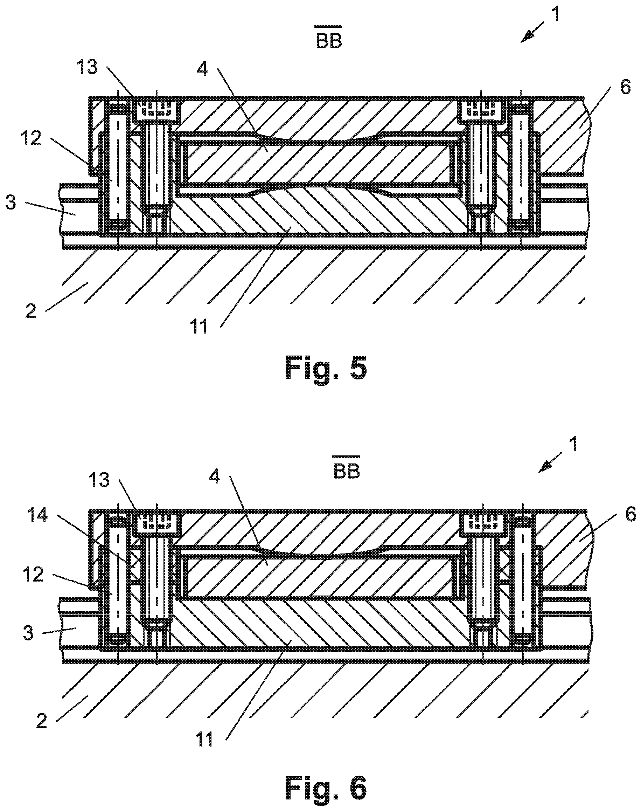

Die Figuren 5 und 6 zeigen dazu zwei illustrative Beispiele, wie eine Drehung der Schwenkschiebetür um eine im Wesentlichen horizontal und quer zur Schieberichtung ausgerichtete Drehachse ermöglicht wird.

Die Fig. 5 zeigt einen Schnitt BB, aus dem ersichtlich wird, dass die Konsole 6 im Bereich des Führungswagens 4 einen konvexen Abschnitt aufweist, welcher auf der ebenen Oberfläche des Führungswagens 4 aufliegt, wodurch ein Drehgelenk mit zwei aufeinander abrollende Wälzflächen gebildet wird. Dadurch dass der Führungswagen 4 in der Regel aus hochfestem und gehärtetem Stahl besteht, kann die Oberseite eines käuflich erwerbbaren Führungswagens ohne weitere Maßnahmen als Wälzfläche fungieren.

Konkret weist die auf der Konsole 6 angeordnete Wälzfläche eine zylindrische Form auf, wobei die Projizierenden normal auf die Blattebene stehen. Die Konsole 6 und damit eine daran befestigte Schwenkschiebetür können somit um eine im Wesentlichen horizontal und quer zur Schieberichtung ausgerichtete Drehachse gegenüber der Profilschiene 3 gedreht werden, wodurch vertikale Durchbiegungen der Profilschiene 3 ausgeglichen werden können.

In diesem Beispiel werden die beiden Wälzflächen durch eine Gewichtskraft der Schwenkschiebetür aneinander gepresst. Zusätzlich sind die zwei aufeinander abrollende Wälzflächen mit Hilfe eines optionalen Gegenhalters 11 gegen Abheben gesichert sind. Der Gegenhalter 11 wird mit Hilfe von Paßstiften 12 gegenüber der Konsole 6 lagefixiert und mit Hilfe der Schrauben 13 mit dieser verschraubt. Um dennoch eine Drehung der Konsole 6 gegenüber der Profilschiene 3 zu ermöglichen kann wie in Fig. 5 dargestellt auch der Gegenhalter 11 konvex geformt sein und/oder ein geringes Spiel zugelassen werden. In letzterem Fall ist ein Abheben der oberen Wälzflächen daher prinzipiell möglich, allerdings wird die "Fallhöhe" (also das Spiel) so gering gewählt, dass eine Beschädigung der Wälzflächen beim Aufschlagen der Konsole 6 auf den Führungswagen 4 vermieden werden kann.

Fig. 6 zeigt eine Variante des Führungssystems, das der in Fig.5 dargestellten Variante sehr ähnlich ist. Im Unterschied dazu presst der optionale Gegenhalter 11 die Wälzflächen mit Hilfe einer Federkraft und/oder durch elastische Verformung aneinander. Konkret wird die Konsole 6 mit dem Gegenhalter 11 dazu über zwei Gummipuffer 14 verschraubt, welche ein Abwälzen der Wälzflächen unter mäßigem Kraftaufwand erlauben, ein Abheben der Wälzflächen aber verhindern oder zumindest erschweren. In dem in Fig. 6 dargestellten Beispiel weist der Gegenhalter 11 keinen konvexen Bereich auf, denkbar ist aber natürlich auch, dass er so wie in Fig. 5 dargestellt geformt ist, wodurch ein Abwälzen der Wälzflächen erleichtert wird.

Prinzipiell ist es für die in der Fig. 6 dargestellten Anordnung ausreichend, wenn sich die Konsole 6 gegenüber dem Gegenhalter 11 translatorisch bewegen kann. In einer Variante der in der Fig. 6 dargestellten Anordnung kann die Passung des Paßstifts 12 aber auch relativ lose gewählt werden oder der Paßstift in einer Gummihülse gelagert sein, sodass ein Verkippen der Konsole 6 und des Gegenhalters 11 gegeneinander möglich sind. Bei entsprechend loser Passung kann der Gegenhalter 11 dabei sogar auch dann auf dem Führungswagen 4 plan aufliegen bleiben, wenn die Konsole 6 gegenüber dem Führungswagen 4 gekippt beziehungsweise verdreht wird.

Obwohl die in den Fig. 5 und 6 dargestellten Gelenke eine Drehung der Konsole 6 gegenüber der Profilschiene 3 um eine im Wesentlichen horizontal und quer zur Schieberichtung ausgerichtete Drehachse erlauben, können die dargestellten Gelenke durch entsprechende Anordnung auch für eine Drehung um eine vertikale Drehachse oder um eine um eine im Wesentlichen parallel zur Schieberichtung ausgerichtete Drehachse vorgesehen werden.

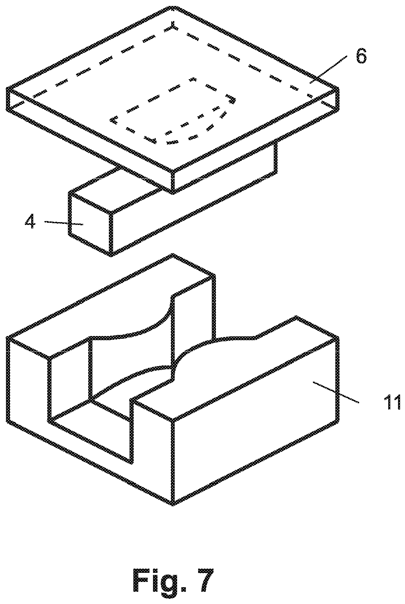

Fig. 7 zeigt stark vereinfacht ein Drehgelenk, dass eine Drehung um zwei Drehachsen ermöglicht. Dazu weisen die Konsole 6 und der optionale Gegenhalter 11 allgemein zylindrische Wälzflächen mit aufeinander quer stehenden Achsen auf. Der Führungswagen 4 weist dagegen wieder ebene Wälzflächen auf. Ein solches Drehgelenk kann die Verformungen einer Profilschiene 3 somit besonders gut ausgleichen. Wegen der linienförmigen Berührung der Wälzflächen können zudem vergleichsweise hohe Kräfte übertragen werden.

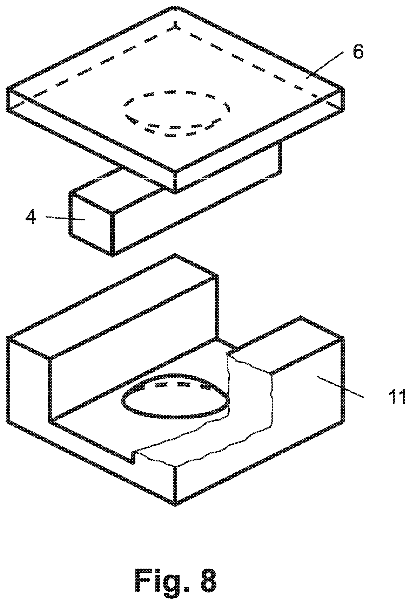

Fig. 8 zeigt stark vereinfacht ein Drehgelenk, dass eine Drehung um beliebige Drehachsen ermöglicht. Dazu weisen die Konsole 6 und der optionale Gegenhalter 11 mehrdimensional gewölbte Wälzflächen, insbesondere kugelförmige Wälzflächen, auf. Ein solches Drehgelenk kann die Verformungen einer Profilschiene 3 ebenfalls besonders gut ausgleichen. Wegen der mehrdimensionalen Wölbung können die Wälzflächen bei Drehung um eine beliebige Achse aufeinander abrollen, wodurch ein Gegeneinandergleiten vermieden und der Verschleiß der Wälzflächen damit verringert wird.

Durch das Vorsehen eines Drehgelenks oder mehrere Drehgelenke wird eine Verformung der Profilschiene 3 ermöglicht ohne die Lagerung zwischen Führungswagen 4 und Profilschiene 3 zu verspannen. Gegenüber bekannten Schwenkschiebetürmodulen kann ein Träger 2, auf dem die Profilschiene 3 befestigt ist, daher vergleichsweise fragil gestaltet werden, da die Schwenkschiebetür (bzw. das Türblatt) trotz einer Verformung der Profilschiene stets leichtgängig bleibt und Schäden in der Lagerung zwischen Führungswagen 4 und Profilschiene 3 vermieden werden.

Generell können vertikale Durchbiegungen der Profilschiene 3 durch Zulassen einer Drehung der Konsole 6 gegenüber der Profilschiene 3 um eine im Wesentlichen horizontal und quer zur Schieberichtung ausgerichtete Drehachse ausgeglichen werden, horizontale Durchbiegungen durch Zulassen einer Drehung um eine im Wesentlichen vertikal ausgerichtete Drehachse und ein Verwinden der Profilschiene durch Zulassen einer Drehung um eine im Wesentlichen parallel zur Schieberichtung ausgerichtete Drehachse.

Generell können Drehungen um mehrere Achsen durch seriell hintereinander geschaltete Einzeldrehgelenke (vergleiche Fig. 2) und/oder durch Drehgelenke realisiert werden, die Drehungen um mehrere Achsen zulassen (vergleiche Fig. 7 und 8). Die Drehgelenke können weiterhin wahlfrei durch aufeinander abwälzenden Wälzflächen und/oder gegeneinander gleitende Flächen (z.B. Bolzen/Gleitbuchse) realisiert sein. Weiterhin ist die Positionierung der Gelenke, wie sie in den obigen Beispielen angegeben wurde, zwar vorteilhaft aber keineswegs zwingend. Prinzipiell kann ein Drehgelenk im Führungswagen 4, zwischen Konsole 6 und Führungswagen 4, in der Konsole 6, zwischen Konsole 6 und Schwenkschiebetür und/oder in der Schwenkschiebetür selbst vorgesehen sein. Bei letzterem Fall kann zum Beispiel eine Montagefläche der Schwenkschiebetür, an welcher die Konsole befestigt wird, gelenkig um das eigentliche Türblatt gelagert sein.

Weiterhin wird auch darauf hingewiesen, dass die Anwendung von Ausgleichsgelenken natürlich nicht an eine Linearwälzführung gebunden ist, wenngleich dort ein Verspannen der Lagerung besonders rasch eine schädigende Folge haben kann. Die Erfindung ist natürlich gleichermaßen auch auf Lineargleitführungen aller Art anwendbar.

Schließlich wird auch angemerkt, dass die Anwendung von Ausgleichsgelenken natürlich auch nicht an die spezielle Anordnung der Profilschienen 3 gebunden ist. Vielmehr können die Berührflächen der Profilschienen 3 zum Träger 2 auch vertikal ausgerichtet sein. Fig. 9 zeigt dazu ein Beispiel eines Führungssystems, bei dem zwei Schwenkschiebetüren 15 über Konsolen 6 an den Führungswägen 4 zweier übereinander angeordneter Linearwälzführungen befestigt sind. Die oben genannte Lehre ist sinngemäß auch auf eine solche Anordnung anwendbar.

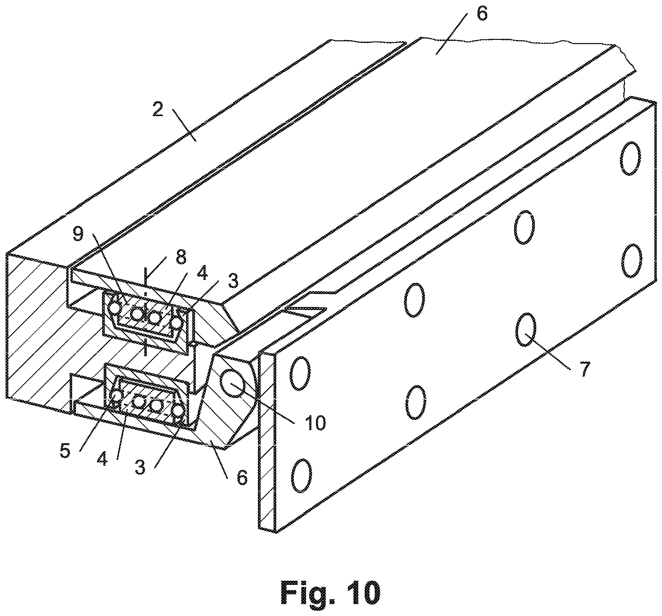

Fig. 10 zeigt ein weiteres Beispiel eines alternativen Führungssystems. Die Profilschiene 3 weist dabei einen im Wesentlichen C-förmigen beziehungsweise U-förmigen Querschnitt auf, wobei der Führungswagen 4 zwischen den gegenüberliegenden Endschenkeln des C-förmigen beziehungsweise U-förmigen Querschnitts gelagert ist. Eine Umlaufbahn 9 der Wälzkörper 5 ist in diesem Beispiel im Führungswagen 4 angeordnet. Damit kann die Bautiefe des Führungssystems gering gehalten werden. Schließlich zeigt die Fig. 10 auch, dass die Wälzkörper 5 zwischen einem Endschenkel der Profilschiene 3 und dem Führungswagen 4 einreihig angeordnet sind. Dadurch ist die Linearführung besonders tolerant gegenüber Verformungen des Führungssystems 1 und damit besonders langlebig.

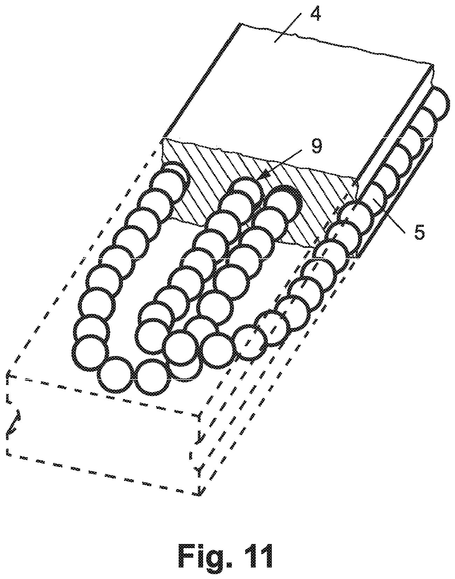

Fig. 11 zeigt ein Beispiel, bei dem die beiden Umlaufbahnen 9 einander in ihren Endbereichen beziehungsweise Umkehrbereichen kreuzen. Die rechte Umlaufbahn 9 wird dabei etwas von der Umlaufebene, in der die Umlaufbahn 9 großteils verläuft, angehoben, die linke Umlaufbahn 9 etwas abgesenkt. Dadurch wird ein vergleichsweise großer Bahnradius bei nur geringer Breite des Führungswagens 4 und damit nur geringer Tiefe des Führungssystems 1 erzielt. Im Rahmen der Erfindung sind die gezeigten Umlaufbahnen 9 wegen der nur geringen Abweichung von der ebenen Form als "im Wesentlichen in einer Ebene angeordnet" anzusehen.

Generell gelingt eine verspannungs-resistente Lagerung dann besonders gut, wenn im Verlauf der Konsole 6 mehrere relativ kurze Führungswagen 4 angeordnet sind, insbesondere wenn an den Enden der Konsole 6 zwei relativ kurze Führungswagen 4 angeordnet sind. Dadurch bleibt die Lagerung der Führungswägen 4 auch bei vergleichsweise starker Durchbiegung des Trägers 2 respektive der Profilschiene 3 leichtgängig. Generell ist es auch möglich, nur einen Führungswagen 4 je Profilschiene 3 einzusetzen, sofern die der Linearführung innewohnende Toleranz ausreichend ist, um eine Verformung des Trägers 2 auszugleichen.

Die in den Figuren 5 bis 8 konkret dargestellten gelenkigen Lagerungen der Konsole 6 können insbesondere dann erfolgen, wenn die Profilschiene 3 nur an deren Enden gelagert ist, sodass die Konsole 6 den Führungswagen 4 gemeinsam mit dem Gegenhalter 11 allseitig umfassen kann (siehe insbesondere Fig. 7 und 8). Soll die Profilschiene 3 wie zum Beispiel in der Fig. 1 dargestellt auf deren gesamter Länge mit dem Träger 2 verbunden werden, so kann beispielsweise der Gegenhalter 11 entfallen oder der Führungswagen 4 einen entsprechenden Fortsatz aufweisen, welcher wiederum von der Konsole 6 gemeinsam mit dem Gegenhalter 11 allseitig umfassen werden kann. Bei den in den Figuren 5 und 6 dargestellten Anordnungen kann der genannte Fortsatz insbesondere seitlich am Führungswagen 4 angeordnet sein, bei den in den Figuren 7 und 8 dargestellten Anordnungen insbesondere in Längsrichtung verlaufen.

Die Ausführungsbeispiele zeigen mögliche Ausführungsvarianten eines erfindungsgemäßen Führungssystems 1, wobei an dieser Stelle bemerkt sei, dass die Erfindung nicht auf die speziell dargestellten Ausführungsvarianten derselben bzw. desselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Insbesondere wird festgehalten, dass ein Führungssystem 1 in der Realität auch mehr oder weniger Bestandteile als dargestellt umfassen kann.

Der Ordnung halber sei abschließend darauf hingewiesen, dass zum besseren Verständnis des Aufbaus des Führungssystems 1 dieses beziehungsweise dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1: Führungssystem
- 2: Träger
- 3: Profilschiene
- 4: Führungswagen
- 5: Wälzkörper

- 6: Konsole
- 7: Befestigungslöcher
- 8: Schwerachse der Profilschiene
- 9: Umlaufbahn der Wälzkörper
- 10: Achse

- 11: Gegenhalter
- 12: Paßstift
- 13: Schraube
- 14: Gummipuffer
- 15: Schwenkschiebetür

## Patentansprüche

1. Schwenkschiebetürmodul für ein Schienenfahrzeug umfassend:
- zumindest eine Schwenkschiebetür (15),
- eine Linearführung (3, 4) mit einer in Schieberichtung der Schwenkschiebetür (15) ausgerichtete Profilschiene (3) und einem darauf verschiebbar gelagerten Schlitten (4),
- eine Konsole (6) oder mehrere Konsolen (6) mit Befestigungsmitteln (7) zum Befestigen der Schwenkschiebetür (15), welche mit dem zumindest einen Schlitten (4) verbunden oder von diesem in Form eines Konsolenbereichs beziehungsweise in Form von mehreren Konsolenbereichen umfasst ist/sind,
**gekennzeichnet durch**,
zumindest ein Drehgelenk, welches eine Drehung der Schwenkschiebetür (15) gegenüber der Profilschiene (3) um eine im Wesentlichen horizontal und quer zur Schieberichtung ausgerichtete Drehachse erlaubt.

2. Schwenkschiebetürmodul nach Anspruch 1, **dadurch gekennzeichnet, dass** das zumindest eine Drehgelenk eine Drehung der Schwenkschiebetür (15) gegenüber der Profilschiene (3) auch um eine im Wesentlichen parallel zur Schieberichtung ausgerichtete Drehachse und/oder eine im Wesentlichen vertikal ausgerichtete Drehachse erlaubt.

3. Schwenkschiebetürmodul nach Anspruch 2, **dadurch gekennzeichnet, dass** das zumindest eine Drehgelenk eine in einer Lagerschale oder einem Wälzlager rotierende Achse (10) umfasst.

4. Schwenkschiebetürmodul nach einem der Ansprüche 1 bis 3, **dadurch gekennzeichnet, dass** das zumindest eine Drehgelenk zwei aufeinander abrollende Wälzflächen umfasst.

5. Schwenkschiebetürmodul nach Anspruch 4, **dadurch gekennzeichnet, dass** eine Wälzfläche eine allgemein zylindrische Form aufweist.

6. Schwenkschiebetürmodul nach Anspruch 5, **gekennzeichnet durch** zwei allgemein zylindrische Wälzflächen mit aufeinander quer stehenden Achsen.

7. Schwenkschiebetürmodul nach Anspruch 4, **dadurch gekennzeichnet, dass** eine Wälzfläche mehrdimensional gewölbt ist.

8. Schwenkschiebetürmodul nach einem der Ansprüche 4 bis 7, **dadurch gekennzeichnet, dass** eine Gewichtskraft der Schwenkschiebetür (15) die beiden Wälzflächen aneinander presst.

9. Schwenkschiebetürmodul nach Anspruch 8, **dadurch gekennzeichnet, dass** eine auf der Konsole (6) angeordnete konvexe Wälzfläche durch die Gewichtskraft der Schwenkschiebetür (15) auf eine horizontal ausgerichtete ebene Wälzfläche des Schlittens (4) gepresst wird.

10. Schwenkschiebetürmodul nach einem der Ansprüche 4 bis 9, **dadurch gekennzeichnet, dass** zwei aufeinander abrollende Wälzflächen mit Hilfe eines Gegenhalters (11) gegen Abheben gesichert sind.

11. Schwenkschiebetürmodul nach Anspruch 10, **dadurch gekennzeichnet, dass** der Gegenhalter (11) die Wälzflächen mit Hilfe einer Federkraft und/oder durch elastische Verformung aneinander presst.

12. Schwenkschiebetürmodul nach einem der Ansprüche 1 bis 11, **dadurch gekennzeichnet, dass** die Linearführung (3, 4) als Linearwälzführung und der Schlitten als ein auf der Profilschiene (3) mittels umlaufender Wälzkörper (5) gelagerter Führungswagen (4) ausgebildet ist.

13. Schwenkschiebetürmodul nach Anspruch 12, **dadurch gekennzeichnet, dass** die Profilschiene (3) auf einem in Schieberichtung der Schwenkschiebetür (15) ausgerichteten Träger (2) befestigt oder von diesem umfasst ist, wobei die Berührfläche der Profil schiene (3) mit dem Träger (2) im Wesentlichen horizontal ausgerichtet ist.

14. Schienenfahrzeug, **gekennzeichnet durch** wenigstens ein Schwenkschiebetürmodul nach einem der Ansprüche 1 bis 13.

## Claims

1. Swinging-sliding door module for a rail vehicle, comprising:
- at least one swinging-sliding door (15),
- a linear guide (3, 4) with a profiled rail (3) orientated in the sliding direction of the swinging-sliding door (15) and a slide (4) fitted and able to be displaced thereon,
- a bracket (6) or a plurality of brackets (6) with fixing means (7) for fixing the swinging-sliding door (15), which is/are connected to the at least one slide (4) or which is/are contained by it in the form of a bracket area or in the form of a plurality of bracket areas,
**characterised by**
at least one rotary joint which enables rotation of the swinging-sliding door (15) relative to the profiled rail (3) about a rotation axis orientated essentially horizontally and transversely to the sliding direction.

2. Swinging-sliding door module according to Claim 1, **characterised in that** the at least one rotary joint also enables a rotation of the swinging-sliding door (15) relative to the profiled rail (3) about a rotation axis essentially parallel to the sliding direction and/or a rotation axis directed essentially vertically.

3. Swinging-sliding door module according to Claim 2, **characterised in that** the at least one rotary joint comprises an axle-pin (10) that rotates in a bearing shell or a roller bearing.

4. Swinging-sliding door module according to any of Claims 1 to 3, **characterised in that** the at least one rotary joint comprises two rolling surfaces that roll on one another.

5. Swinging-sliding door module according to Claim 4, **characterised in that** one rolling surface has a generally cylindrical shape.

6. Swinging-sliding door module according to Claim 5, **characterised by** two generally cylindrical rolling surfaces with axes transverse to one another.

7. Swinging-sliding door module according to Claim 4, **characterised in that** one rolling surface is curved multi-dimensionally.

8. Swinging-sliding door module according to any of Claims 4 to 7, **characterised in that** the weight of the swinging-sliding door (15) presses the two rolling surfaces against one another.

9. Swinging-sliding door module according to Claim 8, **characterised in that** a convex rolling surface arranged on the bracket (6) is pressed by the weight of the swinging-sliding door (15) against a horizontal, flat rolling surface of the slide (4).

10. Swinging-sliding door module according to any of Claims 4 to 9, **characterised in that** two rolling surfaces rolling against one another are prevented from lifting by a counterholder (11).

11. Swinging-sliding door module according to Claim 10, **characterised in that** the counterholder (11) presses the rolling surfaces against one another with the help of a spring force and/or by elastic deformation.

12. Swinging-sliding door module according to any of Claims 1 to 11, **characterised in that** the linear guide (3, 4) is in the form of a linear rolling guide, and the slide is a guide carriage (4) mounted on the profiled rail (3) by means of rotating rolling bodies (5).

13. Swinging-sliding door module according to Claim 12, **characterised in that** the profiled rail (3) is fixed onto a support (2) orientated in the sliding direction of the swinging-sliding door (15), or is surrounded by the said support, in such manner that the contact surface between the profiled rail (3) and the support (2) is essentially horizontal.

14. Rail vehicle, **characterised by** at least one swinging-sliding door module according to any of Claims 1 to 13.

## Revendications

1. Module de porte louvoyante-coulissante d'un véhicule ferroviaire, comprenant :
- au moins une porte (15) louvoyante-coulissante,
- un guidage (3, 4) linéaire ayant un rail (3) profilé dirigé dans la direction de coulissement de la porte (15) louvoyante-coulissante et un chariot (4), qui y est monté coulissant,
- une console (6) ou plusieurs consoles (6) ayant des moyens (7) de fixation pour fixer la porte (15) louvoyante-coulissante, qui est/sont reliées au au moins un chariot (4) ou est/sont entourées de celui-ci, sous la forme d'une partie de console ou, respectivement, sous la forme de plusieurs parties de console,
**caractérisé par**,
au moins une rotule, qui rend possible une rotation de la porte (15) louvoyante-coulissante par rapport au rail (3) profilé, autour d'un axe de rotation dirigé sensiblement horizontalement et transversalement à la direction de coulissement.

2. Module de porte louvoyante-coulissante suivant la revendications 1, **caractérisé en ce que** la au moins une rotule rend possible une rotation de la porte (15) louvoyante-coulissante par rapport au rail (3) profilé, également autour d'un axe de rotation dirigé sensiblement parallèlement à la direction de coulissement et/ou d'un axe de rotation dirigé sensiblement verticalement.

3. Module de porte louvoyante-coulissante suivant la revendication 2, **caractérisé en ce que** la au moins une rotule comprend un axe (10), tournant dans une coquille de coussinet ou dans un palier à roulement.

4. Module de porte louvoyante-coulissante suivant l'une des revendications 1 à 3, **caractérisé en ce que** la au moins une rotule comprend deux surfaces de roulement roulant l'une sur l'autre.

5. Module de porte louvoyante-coulissante suivant la revendication 4, **caractérisé en ce qu'**une surface de roulement a une forme, d'une manière générale, cylindrique.

6. Module de porte louvoyante-coulissante suivant la revendication 5, **caractérisé par** deux surfaces de roulement, d'une manière générale, cylindriques, ayant des axes perpendiculairement l'un sur l'autre.

7. Module de porte louvoyante-coulissante suivant la revendication 4, **caractérisé en ce qu'**une surface de roulement est incurvée suivant plusieurs dimensions.

8. Module de porte louvoyante-coulissante suivant l'une des revendications 4 à 7, **caractérisé en ce qu'**un poids de la porte (15) louvoyante-coulissante presse les deux surfaces de roulement l'une sur l'autre.

9. Module de porte louvoyante-coulissante suivant la revendication 8, **caractérisé en ce qu'**une surface de roulement convexe, disposée sur la console (6), est pressée par le poids de la porte (15) louvoyante-coulissante sur une surface de roulement plane et dirigée horizontalement du chariot (4).

10. Module de porte louvoyante-coulissante suivant l'une des revendications 4 à 9, **caractérisé en ce que** deux surfaces de roulement, roulant l'une sur l'autre, sont empêchées de se soulever à l'aide d'un serre-pièce (11).

11. Module de porte louvoyante-coulissante suivant la revendication 10, **caractérisé en ce que** le serre-pièce (11) presse les surfaces de roulement l'une contre l'autre à l'aide d'une force de ressort et/ou par déformation élastique.

12. Module de porte louvoyante-coulissante suivant l'une des revendications 1 à 11, **caractérisé en ce que** le guidage (3, 4) linéaire est constitué sous la forme d'un guidage à roulement linéaire et le chariot sous la forme d'un chariot (4) de guidage, monté sur le rail (3) profilé, au moyen de pièce (5) de roulement faisant le tour.

13. Module de porte louvoyante-coulissante suivant la revendication 12, **caractérisé en ce que** le rail (3) profilé est fixé sur un support (2), dirigé dans la direction de coulissement de la porte (15) louvoyante-coulissante ou en est entouré, la surface de contact du rail (3) profilé avec le support (2) étant dirigée sensiblement horizontalement.

14. Véhicule ferroviaire, **caractérisé par** au moins un module de porte louvoyante-coulissante suivant l'une des revendications 1 à 13.
